# EUROPEAN PATENT APPLICATION

(11) **EP 2 978 202 A1**
(43) Date of publication of application: **27.01.2016**
(21) Application number: 15171439.1
(22) Date of filing: 10.06.2015
(51) Int. Cl.: H04M 7/00, H04L 29/06, H04M 3/51

(54) **CALLING METHOD, DEVICE AND SYSTEM**

(30) Priority: 21.07.2014 CN 201410347392
(71) Applicant: Xiaomi Inc., Beijing 100085 (CN)
(72) Inventor: Xu, Ruijun, 100085 Haidian District (CN)
(74) Representative: Sadler, Peter Frederick

(57) **Abstract**

The present disclosure relates to a calling method, device and system, and belongs to the field of mobile internet. The method includes: when a call is conducted with an opposite terminal device through a voice channel, establishing a data channel for assisting the call with the opposite terminal device; and displaying in at least one of two ends of the call, interaction information provided by an end opposite to the at least one of two ends of the call according to the data channel, the interaction information being for coordination and interaction between the two ends of the call based on contents of the call. According to the present disclosure, two sides of the call can perform information interaction through a combination of the data channel and the voice channel, so that the information interaction efficiency of the two sides of the call is improved.

## Description

### TECHNICAL FIELD

The present disclosure relates to the field of mobile internet, and more particularly, to a calling method, a calling device and a calling system.

### BACKGROUND

The telephone has become an indispensable part of people's daily life, by which people can conduct exchange of various information. With the quickening pace of life, demand for the efficiency of conducting information interaction during a telephone call is increasing.

In related art, people usually conduct information interaction/exchange through voice communication during a telephone call. For example, during a telephone call between a user and a customer service staff of a telecommunication operator, the customer service staff describes telecommunication services to the user through voice, while the user deals services according to the descriptions of the customer service staff.

In the process of achieving the present disclosure, it is found that the foregoing manner at least has the following defects: although the foregoing method can implement the object of performing information interaction or exchange between both parties in the call, the information interaction process can be performed through the voice approach only, thus the information interaction or exchange efficiency is low.

### SUMMARY

In order to solve the problem that although the related art can achieve the object of performing information interaction between two sides of the call, the information interaction process can be performed through the voice approach only, thus the information interaction efficiency is low, the embodiments of the present disclosure provide a calling method, a calling device and a calling system. The technical solutions are as follows.

The invention is defined in the independent claims to which reference is now directed. Preferred features are set out in the dependent claims.

According to a first aspect of embodiments of the present disclosure, there is provided a calling method, including:
when a call is conducted with an opposite terminal device through a voice channel, establishing a data channel for assisting the call with the opposite terminal device; and
displaying in at least one of two ends of the call, interaction information provided by an end opposite to the at least one of two ends of the call according to the data channel, the interaction information being for coordination and interaction between the two ends of the call based on contents of the call.

Optionally, the establishing the data channel for assisting the call with the opposite terminal device includes:
detecting whether a telephone number of the opposite terminal device is a preset number; and
if the telephone number is the preset number, establishing the data channel for assisting the call with the opposite terminal device.

Optionally, the detecting whether the telephone number of the opposite terminal device is the preset number includes:
if the preset number is a service number, detecting whether the telephone number of the opposite terminal device is recorded in a preset service number whitelist, the service number whitelist being stored locally or in a third party service platform.

Optionally, the establishing the data channel for assisting the call with the opposite terminal device includes:
when receiving a trigger signal for establishing the data channel, establishing the data channel for assisting the call with the opposite terminal device.

Optionally, when the opposite terminal device is an independent calling equipment (independent phone equipment), the data channel is a data channel established between a local terminal and the independent calling equipment; or,
when the opposite terminal device includes a calling equipment and a server associated with the calling equipment, the data channel is a data channel established between the local terminal and the server.

Optionally, the data channel is a data channel established between a local terminal and the opposite terminal device through a third party service platform.

Optionally, the displaying in at least one of two ends of the call, interaction information provided by the end opposite to the at least one of two ends of the call according to the data channel includes:
receiving first interaction information provided by the opposite terminal device through the data channel; displaying the first interaction information in a predetermined form; and/or,
transmitting second interaction information to the opposite terminal device through the data channel, the opposite terminal device being configured to display the second interaction information in a predetermined form or use the second interaction information; and
the predetermined form includes at least one of displaying in a user interface, playing sounds and displaying a signal lamp.

Optionally, the displaying the first interaction information in the predetermined form includes:
when the first interaction information includes a service information page provided by a service number, parsing the service information page, the service information page including at least one of an information display page, an information collection page, a service providing page and a service operation page associated with a service provided by the service number; and
displaying the service information page in the user interface.

Optionally, the displaying the service information page in the user interface includes:
displaying the service information page according to user's operation;
or,
displaying the service information page according to a control by the opposite terminal device.

Optionally, the method further includes:
when the first interaction information is displayed in the user interface and the first interaction information is the service information page provided by the service number, receiving an operation instruction inputted by a user on the service information page; and
transforming the operation instruction into the second interaction information;
wherein the service information page includes at least one of an information display page, an information collection page, a service providing page and a service operation page associated with a service provided by the service number.

According to a second aspect of embodiments of the present disclosure, there is provided a calling method being used in a server associated with a calling equipment, wherein the method includes:
when a call is conducted between a terminal and the calling equipment through a voice channel, establishing a data channel for assisting the call with the terminal; and
displaying in at least one of the terminal and the server, interaction information provided by an end opposite to the at least one of the terminal and the server according to the data channel, the interaction information being for coordination and interaction between two ends of the call based on contents of the call.

Optionally, the establishing the data channel for assisting the call with the terminal includes:
establishing the data channel for assisting the call with the terminal through a third party service platform.

Optionally, the displaying in at least one of the terminal and the server, interaction information provided by an end opposite to the at least one of the terminal and the server according to the data channel includes:
transmitting first interaction information to the terminal through the data channel, the terminal being configured to display the first interaction information in a predetermined form; and/or,
receiving second interaction information provided by the terminal through the data channel; displaying the second interaction information in a predetermined form, or, using the second interaction information;
wherein the predetermined form includes at least one of displaying in a user interface, playing sounds and displaying a signal lamp.

Optionally, when the server is a server corresponding to a service number, the first interaction information includes a service information page corresponding to the service number, the service information page including at least one of an information display page, an information collection page, a service providing page and a service operation page associated with a service provided by the service number.

Optionally, the method further includes:
controlling display of the service information page in the terminal.

Optionally, the second interaction information is information obtained by the terminal by transforming an operation instruction received when the service information page is displayed in the user interface, the operation instruction being inputted on the service information page by a user.

According to a third aspect of embodiments of the present disclosure, there is provided a calling device, including:
a device channel establishing module configured to, when a call is conducted with an opposite terminal device through a voice channel, establish a data channel for assisting the call with the opposite terminal device; and
an interaction information display module configured to display in at least one of two ends of the call, interaction information provided by an end opposite to the at least one of two ends of the call according to the data channel, the interaction information being for coordination and interaction between the two ends of the call based on contents of the call.

Optionally, the channel establishing module includes: a number detection unit and a channel establishing unit;
the number detection unit is configured to detect whether a telephone number of the opposite terminal device is a preset number; and
the channel establishing unit is configured to, if the telephone number is the preset number, establish the data channel for assisting the call with the opposite terminal device.

Optionally, the number detection unit is configured to, if the telephone number is the preset number, detect whether the telephone number of the opposite terminal device is recorded in a preset service number whitelist, the service number whitelist being stored locally or in a third party service platform.

Optionally, the device channel establishing module is configured to, when receiving a trigger signal for establishing the data channel, establish the data channel for assisting the call with the opposite terminal device.

Optionally, when the opposite terminal device is an independent calling equipment, the data channel is a data channel established between a local terminal and the independent calling equipment; or,
when the opposite terminal device includes a calling equipment and a server associated with the calling equipment, the data channel is a data channel established between the local terminal and the server.

Optionally, the data channel is a data channel established between a local terminal and the opposite terminal device through a third party service platform.

Optionally, the interaction information display module includes: an information receiving unit, and/or, an information transmitting unit;
the information receiving unit is configured to receive first interaction information provided by the opposite terminal device through the data channel; display the first interaction information in a predetermined form;
the information transmitting unit is configured to transmit second interaction information to the opposite terminal device through the data channel, the opposite terminal device being configured to display the second interaction information in a predetermined form or use the second interaction information;
wherein the predetermined form includes at least one of displaying in a user interface, playing sounds and displaying a signal lamp.

Optionally, the information receiving unit includes: an information parsing subunit and an information display subunit;
the information parsing subunit is configured to, when the first interaction information includes a service information page provided by a service number, parse the service information page, the service information page including at least one of an information display page, an information collection page, a service providing page and a service operation page associated with a service provided by the service number; and
the information display subunit is configured to display the service information page in the user interface.

Optionally, the information display subunit is configured to display the service information page according to user's operation;
or,
display the service information page according to a control by the opposite terminal device.

Optionally, the interaction information display module further includes: an instruction receiving unit and an instruction transformation unit;
the instruction receiving unit is configured to, when the first interaction information is displayed in the user interface and the first interaction information is the service information page provided by the service number, receive an operation instruction inputted by a user on the service information page; and
the instruction transformation unit is configured to transform the operation instruction into the second interaction information;
wherein the service information page includes at least one of an information display page, an information collection page, a service providing page and a service operation page associated with a service provided by the service number.

According to a fourth aspect of embodiments of the present disclosure, there is provided a calling device being used in a server associated with a calling equipment, wherein the device includes:
a service channel establishing module configured to, when a call is conducted between a terminal and the calling equipment through a voice channel, establish a data channel for assisting the call with the terminal; and
a service information display module configured to display in at least one of the terminal and the server, interaction information provided by an end opposite to the at least one of the terminal and the server according to the data channel, the interaction information being for coordination and interaction between two ends of the call based on contents of the call.

Optionally, the service channel establishing module is configured to establish the data channel for assisting the call with the terminal through a third party service platform.

Optionally, the service information display module includes: a service information transmitting unit, and/or, a feedback information receiving unit;
the service information transmitting unit is configured to transmit first interaction information to the terminal through the data channel, the terminal being configured to display the first interaction information in a predetermined form; and/or,
the feedback information receiving unit is configured to receive second interaction information provided by the terminal through the data channel; displaying the second interaction information in a predetermined form, or, using the second interaction information;
wherein the predetermined form includes at least one of displaying in a user interface, playing sounds and displaying a signal lamp.

Optionally, when the server is a server corresponding to a service number, the first interaction information includes a service information page corresponding to the service number, the service information page including at least one of an information display page, an information collection page, a service providing page and a service operation page associated with a service provided by the service number.

Optionally, the service information display module further includes: a service control display unit;
the service control display unit is configured to control display of the service information page in the terminal.

Optionally, the second interaction information is information obtained by the terminal by transforming an operation instruction received when the service information page is displayed in the user interface, the operation instruction being inputted on the service information page by a user.

According to a fifth aspect of embodiments of the present disclosure, there is provided a calling device, characterized in that, including:
a processor; and
a memory for storing instructions executable by the processor;
wherein the processor is configured to:
when a call is conducted with an opposite terminal device through a voice channel, establishing a data channel for assisting the call with the opposite terminal device; and
displaying in at least one of two ends of the call, interaction information provided by an end opposite to the at least one of two ends of the call according to the data channel, the interaction information being for coordination and interaction between the two ends of the call based on contents of the call.

According to a sixth aspect of embodiments of the present disclosure, there is provided a calling device, characterized in that, the device is used in a server associated with a calling equipment, and the device includes:
a processor; and
a memory for storing instructions executable by the processor;
wherein the processor is configured to:
when a call is conducted between a terminal and the calling equipment through a voice channel, establishing a data channel for assisting the call with the terminal; and
display in at least one of the terminal and the server, interaction information provided by an end opposite to the at least one of the terminal and the server according to the data channel, the interaction information being for coordination and interaction between two ends of the call based on contents of the call.

According to a seventh aspect of embodiments of the present disclosure, there is provided a calling system, characterized in that, the system includes: a terminal, and/or, an opposite terminal device;
the terminal includes the device according to any one of the third aspect and the fifth aspect; and
the opposite terminal device includes the device according to any one of the fourth aspect and the sixth aspect.

The technical solutions provided by the embodiments of the present disclosure may include the following advantageous effects:
one data channel is additionally established between two sides of the call, and the data channel is utilized to transmit interaction information in the process of calling, so that the following problem is solved: although the related art can achieve the object of performing information interaction between the two sides of the call, an information interaction process can be performed through the voice channel only, thus the information interaction efficiency is low; and the following effect is achieved: the two sides of the call can perform information interaction through a combination of the data channel and the voice channel, so that the information interaction efficiency of the two sides of the call is improved.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Figs. 1A, 1B, 1C and 1D are block diagrams of four implementation environments involved by calling methods provided by respective embodiments according to the present disclosure.
Fig. 2 is a flow chart showing a calling method, according to an exemplary embodiment.
Fig. 3 is a flow chart showing a calling method, according to another exemplary embodiment.
Fig. 4 is a flow chart showing a calling method, according to another exemplary embodiment.
Fig. 5A is a flow chart showing a calling method, according to another exemplary embodiment.
Fig. 5B is a block diagram showing an operation of a calling method, according to another exemplary embodiment.
Fig. 6A is a flow chart showing a calling method, according to another exemplary embodiment.
Fig. 6B is a block diagram showing operation of a calling method, according to another exemplary embodiment.
Fig. 6C is a block diagram showing operation of a calling method, according to another exemplary embodiment.
Fig. 6D is a block diagram showing operation of a calling method, according to another exemplary embodiment.
Fig. 7 is a block diagram showing a calling device, according to an exemplary embodiment.
Fig. 8 is a block diagram showing a calling device, according to another exemplary embodiment.
Fig. 9 is a block diagram showing a calling device, according to another exemplary embodiment.
Fig. 10 is a block diagram showing a calling device, according to another exemplary embodiment.
Fig. 11 is a block diagram showing a calling device, according to an exemplary embodiment.
Fig. 12 is a block diagram showing a calling device, according to an exemplary embodiment.
Fig. 13 is a block diagram showing a calling system, according to an exemplary embodiment.

Specific embodiments in this disclosure have been shown by way of example in the foregoing drawings and are hereinafter described in detail. The figures and written description are not intended to limit the scope of the inventive concepts in any manner. Rather, they are provided to illustrate the inventive concepts to a person skilled in the art by reference to particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with some aspects related to the invention as recited in the appended claims.

To facilitate understanding, basic conceptions involved by respective embodiments are introduced firstly.

The "voice channel" herein is usually a channel established in a CS (Circuit Switched) domain, for conducting telephone voice services.

The "data channel" herein is usually a channel established in a PS (Packet Switch) domain or established in the internet, for conducting data transmission service.

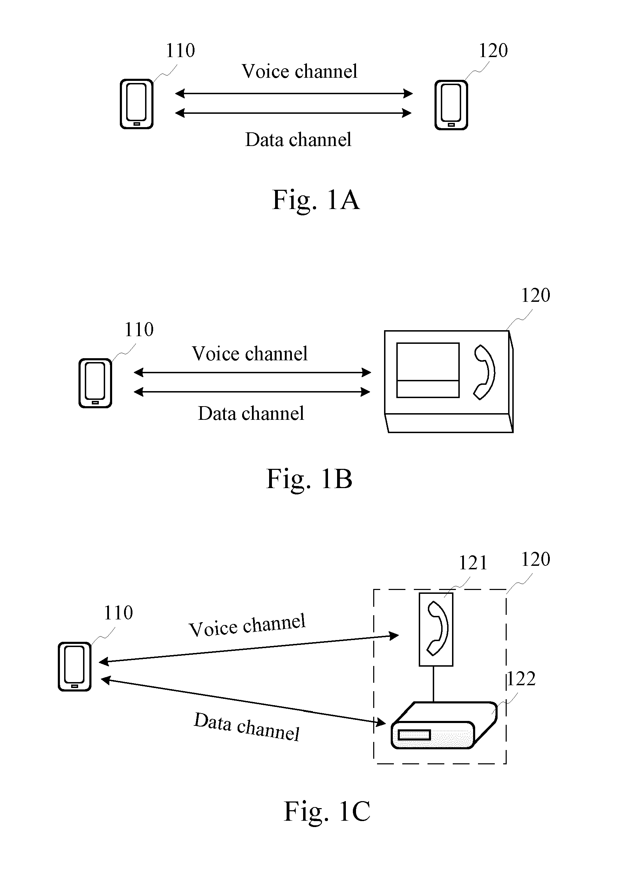

Referring to Fig. 1A, which shows a block diagram of an implementation environment involved by a calling method provided by embodiments of the present disclosure. The implementation environment includes a terminal 110 and an opposite terminal device 120.

Both the terminal 110 and the opposite terminal device 120 are an electronic device having an ability of establishing a voice channel and a data channel at the same time, for example, both the terminal 110 and the opposite terminal device 120 are smartphones.

Between the terminal 110 and the opposite terminal device 120, it is possible to either establish the voice channel only or establish the voice channel and the data channel at the same time.

Referring to Fig. 1B, which shows a block diagram of another implementation environment involved by a calling method provided by embodiments of the present disclosure. The implementation environment includes a terminal 110 and an opposite terminal device 120.

The terminal 110 is an electronic device having an ability of establishing a voice channel and a data channel at the same time, for example, the terminal 110 is a smartphone, a tablet having a telephone function, and the like.

The opposite terminal device 120 may be an aggregation device of a calling equipment and a server associated with the calling equipment. The aggregation device is an electronic device having an ability of establishing a voice channel and a data channel at the same time, for example, a computer device integrated with the telephone ability.

The voice channel and the data channel can be established between the terminal 110 and the opposite terminal device 120 at the same time.

Referring to Fig. 1C, which shows a block diagram of further another implementation environment involved by a calling method provided by embodiments of the present disclosure. The implementation environment includes a terminal 110 and an opposite terminal device 120.

The terminal 110 is an electronic device having the ability of establishing a voice channel and a data channel at the same time, for example, the terminal 110 is a smartphone, a tablet having a telephone function, and the like.

The opposite terminal device 120 includes a calling equipment 121 and a server 122, and the server 122 is a server associated with the calling equipment 121. The calling equipment 121 may either be a fixed phone or a mobile phone. The server 122 may either be one server, or a server cluster consisting of several servers, or a cloud computing service center.

The terminal 110 may establish the voice channel with the calling equipment 121, and establish the data channel with the server 122.

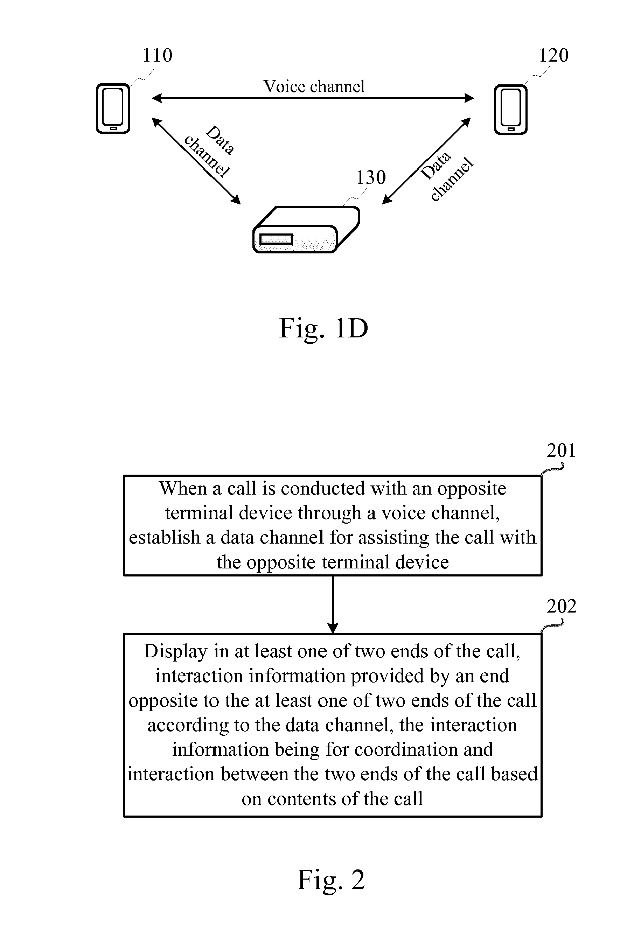

Referring to Fig. 1D, which shows a block diagram of still another implementation environment involved by a calling method provided by embodiments of the present disclosure. The implementation environment includes a calling terminal 110, an opposite terminal device 120, and a third party sever 130.

The terminal 110 is an electronic device having the ability of establishing a voice channel and a data channel at the same time, for example, the terminal 110 is a smartphone, a tablet having a telephone function, and the like.

The opposite terminal device 120 may be an opposite terminal device shown in Fig. 1A, Fig. 1B or Fig. 1C.

The third party server 130 may either be one server, or a server cluster consisting of several servers, or a cloud computing service center.

The voice channel may be directly established between the terminal 110 and the opposite terminal device 120; moreover, the data channel may be established between the terminal 110 and the opposite terminal device 120 through the third party server 130.

Fig. 2 is a flow chart showing a calling method, according to an exemplary embodiment. The embodiment is illustrated by applying the calling method to the terminal in the foregoing implementation environment. The calling method may include several steps as follows.

In step 201, when a call is conducted with an opposite terminal device through a voice channel, a data channel for assisting the call is established with the opposite terminal device.

In step 202, in at least one of two ends of the call, interaction information provided by an end opposite to the at least one of two ends of the call is displayed according to the data channel, the interaction information being for coordination and interaction between the two ends of the call based on contents of the call.

In conclusion, according to the calling method provided by the embodiment, one data channel is additionally established between two sides of the call and is utilized to transmit interaction information during the call, so that the following problem is solved: although the related art can implement the object of performing information interaction between the two sides of the call, an information interaction process can be performed through the voice channel only, thus information interaction efficiency is low; and the following effect is achieved: the two sides of the call can perform information interaction through a combination of the data channel and the voice channel, so that the information interaction efficiency of the two sides of the call is improved.

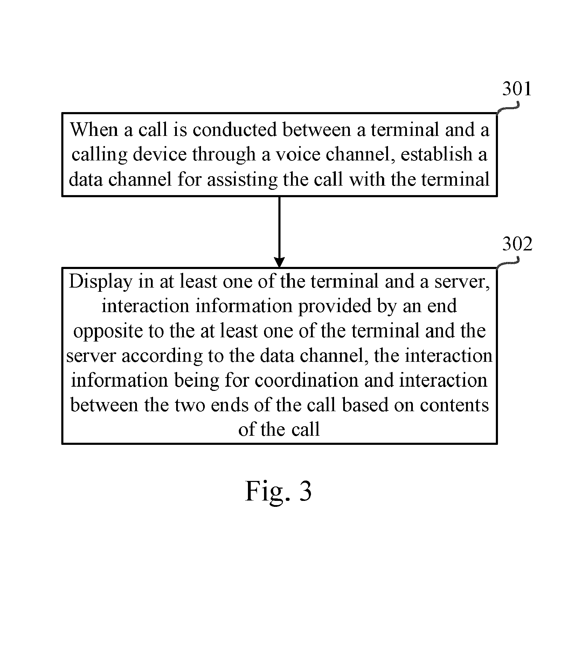

Fig. 3 is a flow chart showing a calling method, according to another exemplary embodiment. The embodiment is illustrated by applying the calling method to the server 122 in the implementation environment as shown in Fig. 1C. The calling method may include several steps as follows.

In step 301, when a call is conducted between a terminal and the calling equipment through a voice channel, a data channel for assisting the call is established with the terminal.

In step 302, in at least one of the terminal and the server, interaction information provided by an end opposite to the at least one of the terminal and the server is displayed according to the data channel, the interaction information being for coordination and interaction between two ends of the call based on contents of the call.

In conclusion, according to the calling method provided by the embodiment, one data channel is additionally established between two sides of the call and is utilized to transmit interaction information during the call, so that the following problem is solved: although the related art can implement the object of performing information interaction between the two sides of the call, an information interaction process can be performed through the voice channel only, thus the information interaction efficiency is low; and the following effect is achieved: the two sides of the call can perform information interaction through a combination of the data channel and the voice channel, so that the information interaction efficiency of the two sides of the call is improved.

An executive subject of the calling method mentioned by respective embodiments of the present disclosure may also be an application. The application may be an operating system of mobile phone, a client program, and a combination of the operating system and the client program, or a combination of a plurality of client programs. The application may be operated on electronic products having both functions of calling and data networking, for example, a mobile phone, and a tablet.

The "interaction information" mentioned by the embodiments of the present disclosure includes:
first interaction information; or,
second interaction information; or,
the first interaction information and the second interaction information.

The first interaction information is interaction information provided by the opposite terminal device to the terminal, and the second interaction information is interaction information provided by the terminal to the opposite terminal device. Differing from a videophone, the interaction information usually does not refer to portrait video information of two sides of the call, but refers to information associated with contents of the call of two ends of the call. The information may include graphical interface information, audio information, control information, and the like. The information and the voice channel may assist mutually to improve the information interaction efficiency of the two ends of the call. When the terminal and the opposite terminal device are devices like mobile phones, the interaction information is usually information for sharing words, images, and/or voices of the opposite side which is displayed in a user interface of incoming call, for example, the user interface of the mobile phone A is entirely or partially shared to the mobile phone B. When the terminal is a device like a mobile phone and the opposite terminal device is a device provided by a service number, the interaction information is usually a service information page associated with a service provided by the service number. The service information page includes an information display page, an information collection page, a service providing page, and a service operation page, etc.

With respect to different implementation scenarios, the following several different embodiments are referred to.

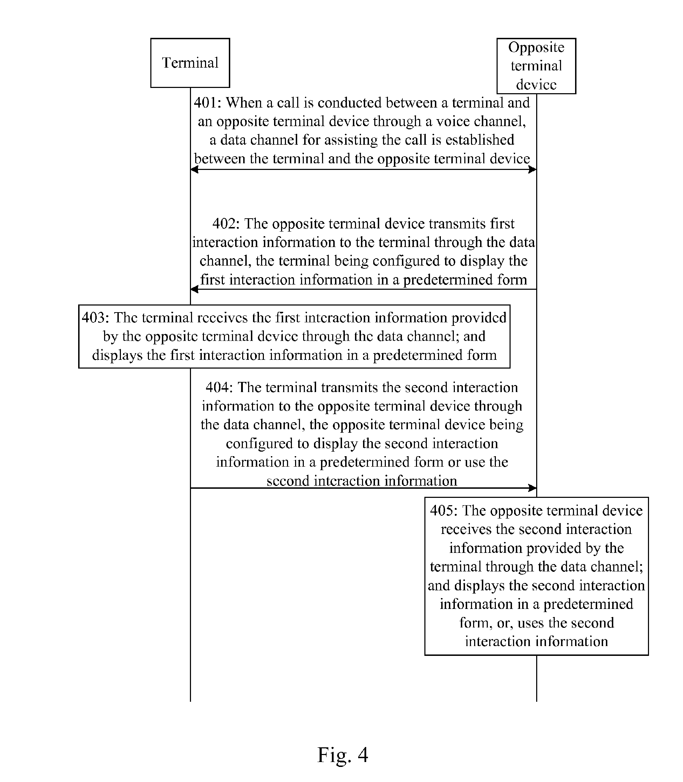

Fig. 4 is a flow chart showing a calling method, according to another exemplary embodiment. The embodiment is illustrated by applying the calling method to the implementation environment as shown in Fig. 1A. The calling method may include several steps as follows.

In step 401, when a call is conducted between a terminal and an opposite terminal device through a voice channel, a data channel for assisting the call is established between the terminal and the opposite terminal device.

When a call is conducted between the terminal and the opposite terminal device through the voice channel, the data channel for assisting the call may be established between the terminal and the opposite terminal device according to situations. The data channel may be established during the call; may be established at the same time with the establishment of the voice channel; or may be established after the establishment of the voice channel. The voice channel may either be a channel established when the terminal initiates a call, or a channel established when the opposite terminal device sends a call.

The terminal will establish the data channel for assisting the call with the opposite terminal device usually in the following two cases.

The first case: the terminal detects whether a telephone number of the opposite terminal device is a preset number; if the telephone number is the preset number, the terminal establishes the data channel for assisting the call with the opposite terminal device; and if the telephone number is not the preset number, the terminal does not establish the data channel for assisting the call with the opposite terminal device.

The preset number may be preset by the user and saved locally. The preset number may also be provided by a server, and the terminal preload and save the preset number locally. The preset number may also be stored in the server side.

The second case: when receiving a trigger signal for establishing the data channel, the terminal establishes the data channel for assisting the call with the opposite terminal device.

That is, when the terminal receives a trigger signal for establishing the data channel triggered by the user, the terminal establishes the data channel for assisting the call with the opposite terminal device. Alternatively, when receiving a trigger signal for establishing the data channel transmitted by the opposite terminal device, the terminal may decide whether to establish the data channel for assisting the call with the opposite terminal device according to the selection of the user.

Since the opposite terminal device in the embodiment is an independent calling equipment, the data channel mentioned in the embodiment is a data channel established between the terminal and the opposite terminal device.

In step 402, the opposite terminal device transmits first interaction information to the terminal through the data channel, the terminal being configured to display the first interaction information in a predetermined form.

After the terminal establishes the data channel with the opposite terminal device, the opposite terminal device may transmit the first interaction information through the data channel. The first interaction information may be carried through a web page form.

For example, the first interaction information may be a picture, and the opposite terminal device transmits the picture to the terminal through the data channel. For another example, the first interaction information is all or part of contents displayed in the current screen of the opposite terminal device, and the opposite terminal device transmits the all or part of the contents displayed in the screen to the terminal through the data channel.

In step 403, the terminal receives the first interaction information provided by the opposite terminal device through the data channel; and displays the first interaction information in a predetermined form.

After receiving the first interaction information transmitted by the opposite terminal device, the terminal displays the first interaction information on the terminal in a predetermined form. When the first interaction information is carried through a web page form, the terminal parses the first interaction information, and displays the first interaction information on a user interface. The user interface may be an incoming call interface.

The predetermined form includes at least one of displaying in a user interface, playing sounds and displaying a signal lamp. That is, if the information is image or video information, then the information is displayed in the user interface; if the information includes audio information, then the audio information is played; and if the information includes information of calling a signal lamp of the terminal, then the signal lamp is lightened.

For example, when the first interaction information received by the terminal is a picture, the terminal may display the picture on the screen, and make some modifications or marks on the picture. The modified or marked picture may be served as the second interaction information. For another example, when the first interaction information received by the terminal is contents displayed on the screen of the opposite terminal device, the contents displayed on the screen of the opposite terminal device may be displayed in the user interface, and then the user instructs the user of the opposite terminal device how to operate the opposite terminal device by voice through the voice channel.

In step 404, the terminal transmits the second interaction information to the opposite terminal device through the data channel, the opposite terminal device being configured to display the second interaction information in a predetermined form or use the second interaction information; and
after generating the second interaction information, the terminal transmits the second interaction information to the opposite terminal device.

For example, when the second interaction information is the modified or marked picture, the terminal transmits the modified or marked picture to the opposite terminal device.

In step 405, the opposite terminal device receives the second interaction information provided by the terminal through the data channel; and displays the second interaction information in a predetermined form, or, uses the second interaction information.

After receiving the second interaction information transmitted by the terminal, the opposite terminal device displays or uses the received second interaction information in a predetermined form.

For example, when the second interaction information is the modified or marked picture, the opposite terminal device may display the picture on the screen, and the user can acquire the modification and mark information of the picture. The picture can also be used as a wall paper.

At this point, two sides of the call finish one information interaction through the data channel. When the two sides of the call perform information interaction through the data channel, supplementation and explanation may be made through the voice channel at any time.

In conclusion, according to the calling method provided by the embodiment, one data channel is additionally established between two sides of the call and is utilized to transmit interaction information; so that the following problem is solved: although the related art can implement the object of performing information interaction between the two sides of the call, an information interaction process can be performed through the voice channel only, thus the information interaction efficiency is low; and the following effect is achieved: the two sides of the call can perform information interaction through a combination of the data channel and the voice channel, so that the information interaction efficiency of the two sides of the call is improved.

It should be additionally noted that the embodiment, through multiple predetermined display modes of information, increases the diversity of performing information interaction through the data channel, and thus achieve the effect of further improving the information interaction efficiency.

It should be additionally noted that the mutual transfer steps of the first interaction information and the second interaction information in the embodiment may be repeatedly performed multiple times till the two sides of the call complete the information interaction, which will not be limited by the embodiment.

In an illustrative embodiment, the user B of the opposite terminal device is unfamiliar to the microblogging operation on the opposite terminal device and wants to ask for help from the user A of the terminal. In this case, the user B may dial the telephone number of the terminal firstly to establish the voice channel, and then transmit a trigger signal for establishing the data channel to the terminal. The terminal establishes the data channel after receiving the signal, and the user B may take the contents displayed on the screen of the opposite terminal device as the first interaction information and transmit it to the terminal. The terminal displays the contents displayed on the screen of the opposite terminal device on the incoming call interface, and the user A may see the contents displayed on the screen of the opposite terminal device which are displayed on the terminal. Then the user A instructs the user B in real time through the voice channel, or may make marks for instructing operations on the contents displayed on the screen and transmit the marked contents as the second interaction information to the user B, or may use a combination of the above two methods, so as to coordinate and instruct the user B to finish the microblogging operation through the two manners of voice and visual information.

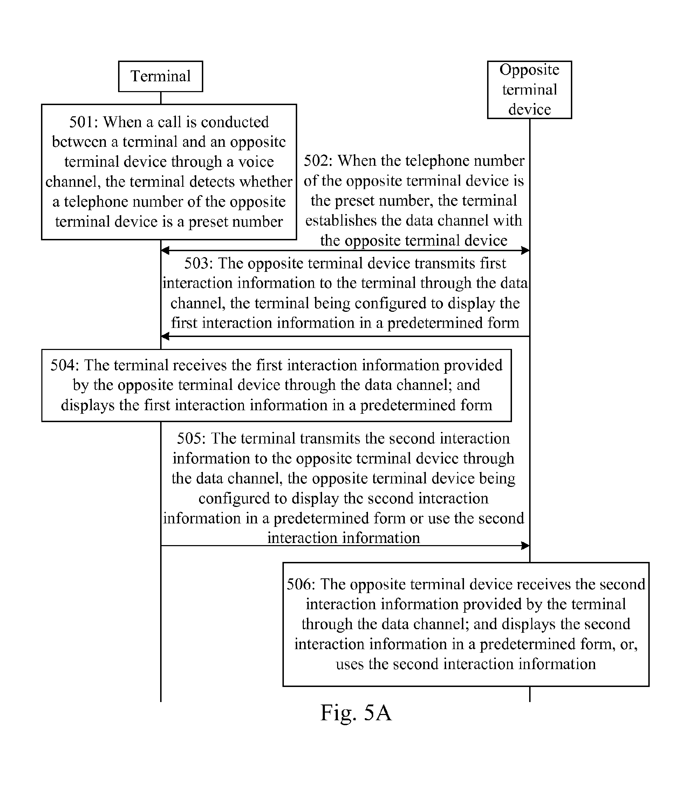

Fig. 5A is a flow chart showing a calling method, according to another exemplary embodiment. The embodiment is illustrated by applying the calling method to the implementation environment as shown in Fig. 1B or Fig. 1D. The calling method may include several steps as follows.

In step 501, when a call is conducted between a terminal and an opposite terminal device through a voice channel, the terminal detects whether a telephone number of the opposite terminal device is a preset number.

The terminal may either dial the telephone number of the opposite terminal device to establish the voice channel or receive a call from the opposite terminal device to establish the voice channel.

When conducting a call through the voice channel, the terminal detects whether the telephone number of the opposite terminal device is a preset number; if the telephone number is the preset number, the terminal establishes a data channel for assisting the call with the opposite terminal device; and if the telephone number is not the preset number, the terminal does not establish the data channel for assisting the call with the opposite terminal device.

When the preset number is a service number, the terminal detects whether the telephone number of the opposite terminal device is recorded in a preset service number whitelist, the service number whitelist being stored locally or in a third party service platform. That is, the service number whitelist may be stored locally in advance by the user, a terminal provider or the third party service platform. The service number whitelist may also be generated by the third party service platform, and then is regularly downloaded and stored locally by the terminal. The service number whitelist may also be stored by the third party service platform, in this way, the terminal transmits the preset number to the third party service platform during detection, and the third party service platform finishes the detecting process and returns a detecting result to the terminal.

The service number is a telephone number provided by service institutions, public institutions as well as enterprises and institutions for offering full-automatic voice service or agent service to the user. That is, the service number may be various service telephones of catering industry, the service telephones of communication operators, or the telephones of various housekeeping companies.

Since the opposite terminal device in the implementation environment of the embodiment is an independent calling equipment, the data channel mentioned in the embodiment is a data channel established between the terminal and the opposite terminal. When being applied to the implementation environment as shown in Fig. 1D, the terminal establishes the data channel with another terminal through the third party service platform. That is, the data channel is a data channel established between the terminal and the opposite terminal device through the third party service platform.

For example, in the embodiment, the opposite terminal device is a communication operator and the number is 12345. The user dials 12345 through the terminal to establish a voice channel with the opposite terminal device. The terminal may query locally or the third party server whether 12345 is in the service number whitelist. If 12345 is in the service number whitelist, then the next step is performed. If 12345 is not in the service number whitelist, the operation is stopped. That is, the terminal only establishes the voice channel with the opposite terminal device.

In step 502, when the telephone number of the opposite terminal device is the preset number, the terminal establishes the data channel with the opposite terminal device.

When the telephone number of the opposite terminal device is the preset number, the terminal establishes the data channel with the opposite terminal device. The data channel may be established in the process of calling; may be established at the same time with the establishment of the voice channel; or may also be established after the establishment of the voice channel.

In step 503, the opposite terminal device transmits first interaction information to the terminal through the data channel, the terminal being configured to display the first interaction information in a predetermined form.

After the data channel is established between the terminal and the opposite terminal device, the opposite terminal device may transmit the first interaction information through the data channel. Since the opposite terminal device is a device corresponding to the service number, the first interaction information includes a service information page provided by the service number. The service information page includes at least one of an information display page, an information collection page, a service providing page and a service operation page associated with a service provided by the service number.

For example, the information display page may be service introduction information of various types of services; the information collection page may be a user information input page including an input box; the service providing page may be a game page when waiting for services, a query result displaying page for a query service and an ordering result page when ordering a meal; and the service operation page may be an operation page including controls such as a button, and a menu.

The service information page may be multiple. The service information page may have a menu hierarchy. The service information page may be carried through a web page form.

For example, the first interaction information may be a service evaluation interface after an agent finishes the service. The opposite terminal device transmits the service evaluation interface to the terminal through the data channel.

In step 504, the terminal receives the first interaction information provided by the opposite terminal device through the data channel; and displays the first interaction information in a predetermined form.

After receiving the first interaction information transmitted by the opposite terminal device, the terminal displays the information on the terminal in a predetermined form. When the first interaction information is carried through a web page form, the terminal parses the first interaction information, and displays the service information page on a user interface.

The predetermined form includes at least one of displaying in a user interface, playing sounds and displaying a signal lamp. That is, if the information is image or video information, then the information is displayed in the user interface. If the information includes audio information, then the audio information is played. If the information includes information of calling a signal lamp of the terminal, then the signal lamp is lightened.

The implementation manners for the terminal to display the service information page in the user interface include the following two manners.

First manner: the service information page is displayed according to user's operation.

The terminal receives the user's operation on the service information page, then displays different forms of one service information page according to the user's operation, or switches and displays among different service information pages.

For example, the service information page includes a button. When the user clicks the button, the terminal requests a next service information page corresponding to the button from the opposite terminal device, switches the service information page and displays the next service information page if the request is successful.

Second manner: the service information page is displayed according to the control by the opposite terminal device.

When displaying the service information page, the terminal receives a display control instruction transmitted by the opposite terminal device through the data channel, displays different forms of one service information page according to the display control instruction, or switches and displays among different service information pages.

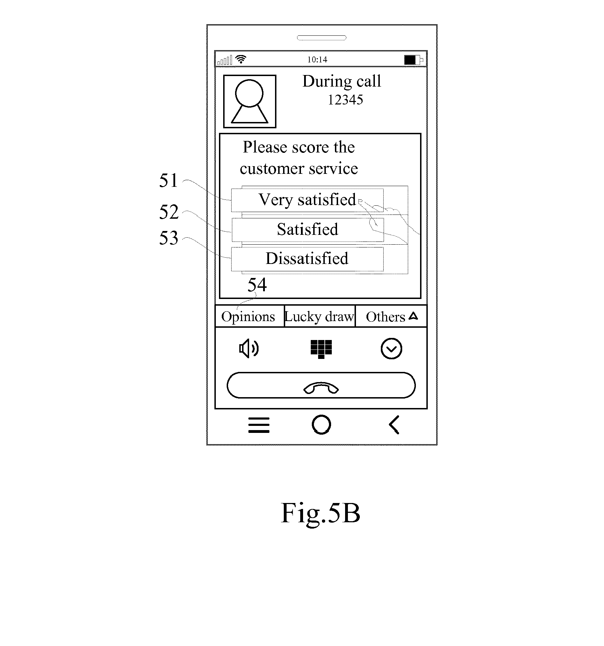

For example, as shown in Fig. 5B, the first interaction information is a service evaluation interface transmitted by a mobile communication operator; the user may click buttons 51, 52 and 53 in the interface to evaluate the service quality of the mobile communication operator, and may also click an opinion button 54 to express opinions. The operation information to the evaluation interface by the user may be served as second interaction data and transmitted to the opposite terminal device through the data channel.

In step 505, the terminal transmits the second interaction information to the opposite terminal device through the data channel, the opposite terminal device being configured to display the second interaction information in a predetermined form or use the second interaction information; and

after generating the second interaction information, the terminal transmits the second interaction information to the opposite terminal device.

The process for generating the second interaction information may be as follows: when the first interaction information is displayed in the user interface of the terminal and the first interaction information is the service information page provided by the service number, the terminal receives the operation instruction inputted by the user on the service information page, and transforms the operation instruction into the second interaction information.

For example, after the user evaluates this service in the service evaluation interface, the terminal will transmit the operation information to the opposite terminal device as the second interaction information.

In step 506, the opposite terminal device receives the second interaction information provided by the terminal through the data channel; and displays the second interaction information in a predetermined form, or, uses the second interaction information.

After receiving the second interaction information transmitted by the terminal, the opposite terminal device displays in a predetermined form or uses the received second interaction information.

For example, the second interaction information is the evaluation information of the user, the opposite terminal device may display the evaluation information on the screen, and a customer service staff operating the opposite terminal device may acquire the satisfaction evaluation and opinions on this service from the screen. For another example, the second interaction information is the evaluation information of the user, the opposite terminal device may directly transmit the evaluation information to a server in a headquarter office for statistics, so as to carry out performance appraisal on the customer service staff.

At this point, the two sides of the call complete one information interaction through the data channel. When the two sides of the call perform information interaction through the data channel, supplementation and explanation may be made through the voice channel at any time.

In conclusion, according to the calling method provided by the embodiment, one data channel is additionally established between two sides of the call and is utilized to transmit interaction information; so that the following problem is solved: although the related art can achieve the object of performing information interaction between the two sides of the call, an information interaction process can be performed through the voice channel only, thus the information interaction efficiency is low; and the following effect is achieved: two sides of the call can perform information interaction through a combination of the data channel and the voice channel, so that the information interaction efficiency of the two sides of the call is improved.

It should be additionally noted that the embodiment, through multiple predetermined display modes of information, increases the diversity of performing information interaction through the data channel, and thus achieve the effect of further improving the information interaction efficiency.

It should be additionally noted that the mutual transfer steps of the first interaction information and the second interaction information in the embodiment may be repeatedly performed multiple times till the two sides of the call complete the information interaction, which will not be limited by the embodiment.

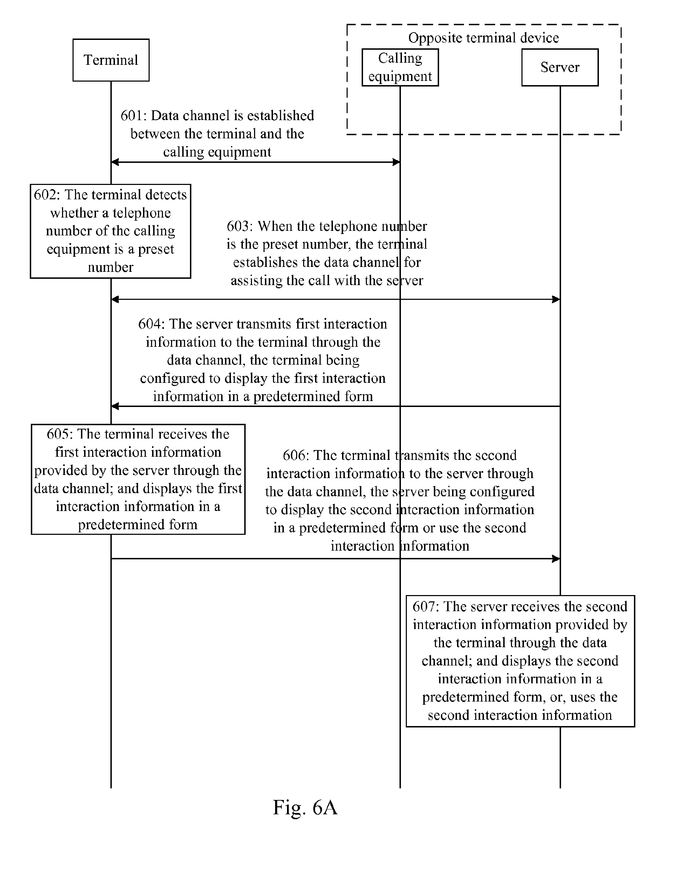

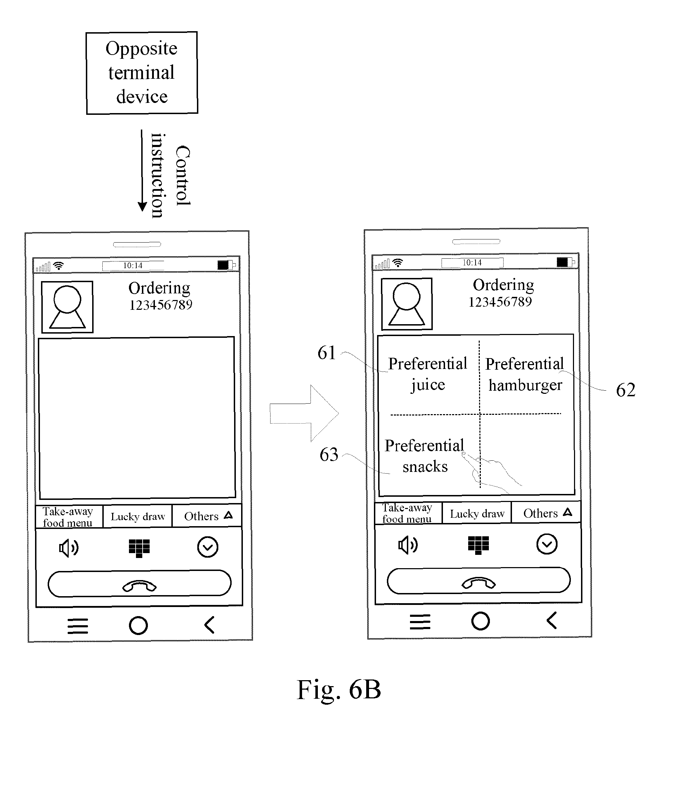

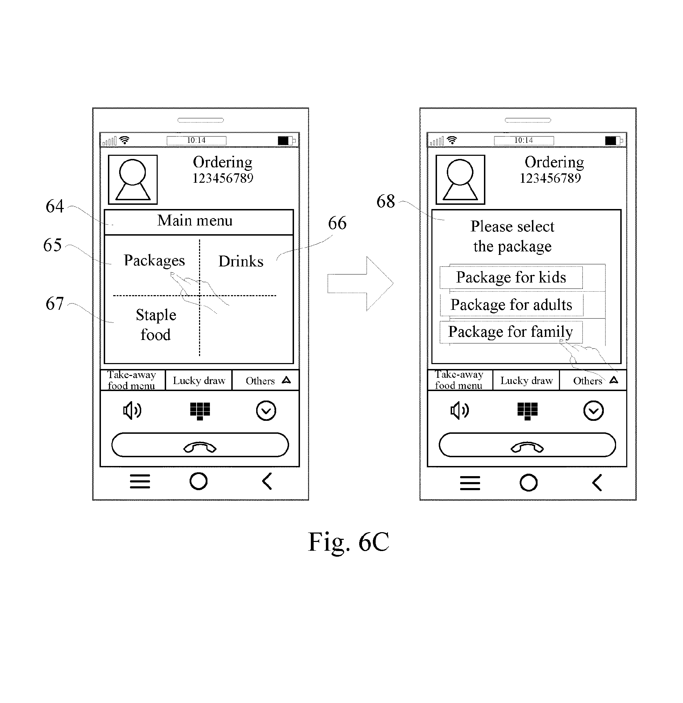

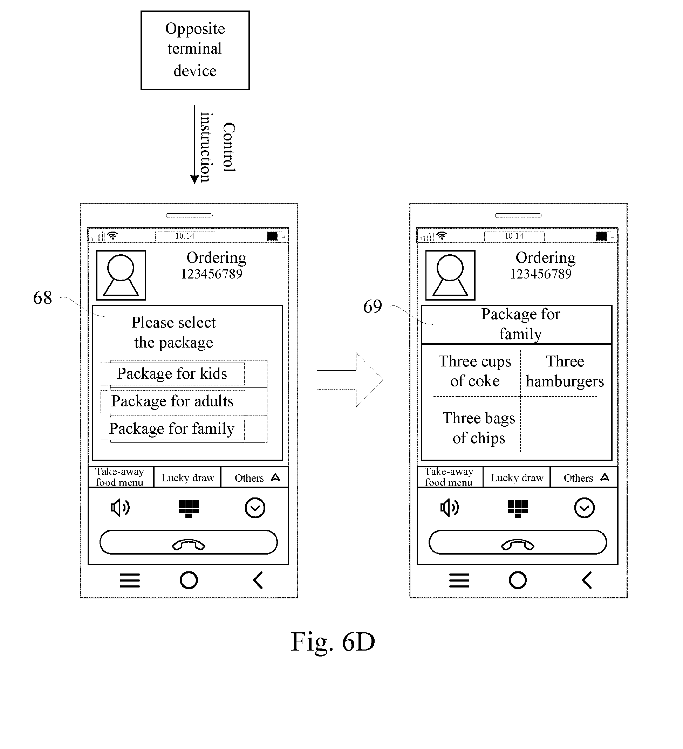

Fig. 6 is a flow chart showing a calling method, according to another exemplary embodiment. The embodiment is illustrated by applying the calling method to the implementation environment as shown in Fig. 1C or Fig. 1D. The calling method may include several steps as follows.

In step 601, a data channel is established between a terminal and a calling opposite terminal.

In the embodiment, the opposite terminal device includes a calling equipment and a server associated with the calling equipment.

The voice channel established between the terminal and the calling equipment may either be a voice channel established by the terminal dialing the telephone number of the calling equipment, or a voice channel established by the calling equipment dialing the telephone number of the terminal.

In step 602, the terminal detects whether the telephone number of the calling equipment is a preset number.

The terminal detects whether the telephone number of the calling equipment is a preset number. When the telephone number is the preset number, next step is performed. When the telephone number is not the preset number, the terminal establishes the voice channel with the calling equipment only.

When the preset number is a service number, the terminal detects whether the telephone number of the calling equipment is recorded in a preset service number whitelist, the service number whitelist being stored locally or in a third party service platform. That is, the service number whitelist may be stored locally in advance by the user, a terminal provider or the third party service platform. The service number whitelist may also be generated by the third party service platform, and then is regularly downloaded and stored locally by the terminal. The service number whitelist may also be stored by the third party service platform, in this way, the terminal transmits the preset number to the third party service platform during detection, and the third party service platform completes the detecting process and returns a detecting result to the terminal.

The service number is a telephone number provided by service institutions, public institutions as well as enterprises and institutions for offering full-automatic voice service or agent service to the user. That is, the service number may be various service telephones of catering industry, the service telephones of communication operators or the telephones of various housekeeping companies.

In step 603, when the telephone number of the calling opposite terminal is the preset number, the terminal establishes the data channel for assisting the call with the server.

When the telephone number of the calling opposite terminal is the preset number, the terminal establishes the data channel for assisting the call with the server corresponding to the calling equipment.

Since the opposite terminal device in the embodiment includes the calling equipment and the server associated with the calling equipment, the data channel is a data channel established between the terminal and the server. Moreover, the data channel may be a data channel established between the local terminal and the opposite terminal device through a third party service platform. A third party server of the third party service platform may acquire interaction information passing through the data channel for statistical analysis. The terminal and the opposite terminal device may also acquire associated data through the third party server.

In one possible implementation manner, the terminal transmits a request for establishing the data channel to the third party service platform, the request for establishing the data channel carrying the telephone number of the calling equipment; the third party service platform firstly establishes a data channel between the terminal and the third party service platform, queries the server corresponding to the calling equipment according to the telephone number of the calling equipment, then establishes a data channel between the third party service platform and the server, and transits the interaction information between the terminal and the server.

In step 604, the server transmits first interaction information to the terminal through the data channel, the terminal being configured to display the first interaction information in a predetermined form.

After the data channel is established between the terminal and the server, data interaction may be performed through the data channel. When the server is a server corresponding to the service number, the first interaction information includes a service information page corresponding to the service number, the service information page including at least one of an information display page, an information collection page, a service providing page and a service operation page associated with a service provided by the service number.

For example, an opposite terminal number may be an ordering telephone of a fast food restaurant, the first interaction information may be a service information page associated with ordering, and the opposite terminal device transmits the service information page to the terminal through the data channel.

In step 605, the terminal receives the first interaction information provided by the server through the data channel; and displays the first interaction information in a predetermined form.

After receiving the first interaction information transmitted by the opposite terminal device, the terminal displays the information on the terminal in a predetermined form. When the first interaction information is carried through a web page form, the terminal parses the first interaction information, and displays the service information page in a user interface.

The predetermined form includes at least one of displaying in a user interface, playing sounds and displaying a signal lamp. That is, if the information is image or video information, then the information is displayed in the user interface. If the information includes audio information, then the audio information is played. If the information includes information of calling a signal lamp of the terminal, then the signal lamp is lightened.

The implementation manners for the terminal to display the service information page in the user interface include the following two manners.

First manner: the service information page is displayed according to user's operation.

The terminal receives the user's operation on the service information page, then displays different forms of one service information page according to the user's operation, or switches and displays among different service information pages.

For example, the service information page includes a button. After the user clicks the button, the terminal requests a next service information page corresponding to the button from the opposite terminal device, switches the service information page and displays the next service information page when the request is successful.

Second manner: the service information page is displayed according to the control by the opposite terminal device.

When displaying the service information page, the terminal receives a display control instruction transmitted by the opposite terminal device through the data channel, displays different forms of one service information page according to the display control instruction, or switches and displays among different service information pages. That is, the user may inform a service staff of the opposite terminal device of a required information page, the service staff transmits a control instruction to the terminal through the opposite terminal device. After receiving the control instruction, the terminal displays according to the control instruction, or the service staff of the opposite terminal device transmits a control instruction that controls the terminal to display a recommended page directly to the terminal through the opposite terminal device, and the terminal performs associated display after receiving the instruction.

In step 606, the terminal transmits the second interaction information to the server through the data channel, the server being configured to display the second interaction information in a predetermined form or use the second interaction information; and
after generating the second interaction information, the terminal transmits the second interaction information to the server.

The process for generating the second interaction information may be as follows: when the first interaction information is displayed in the user interface of the terminal and the first interaction information is the service information page provided by the service number, the terminal receives the operation instruction inputted by the user on the service information page, and transforms the operation instruction into the second interaction information.

For example, in the embodiment, the terminal may transmit selection operation information for selecting a package to the server as the second interaction information.

In step 607, the server receives the second interaction information provided by the terminal through the data channel; and displays the second interaction information in a predetermined form, or, uses the second interaction information.

After receiving the second interaction information transmitted by the terminal, the server displays in a predetermined form or uses the received second interaction information. The second interaction information is information obtained by the terminal by transforming an operation instruction received when the service information page is displayed in the user interface, the operation instruction being inputted on the service information page by the user.

For example, the second interaction information is the selection operation information of the user on the ordering page, then the service staff of the opposite terminal may acquire the package ordered by the user through the information, and may also transmit the ordering information of the user to a database to count which package has the maximum order quantity.

At this point, the two sides of the call complete one information interaction through the data channel. When the two sides of the call perform information interaction through the data channel, supplementation and explanation may be made through the voice channel at any time.

In conclusion, according to the calling method provided by the embodiment, one data channel is additionally established between two sides of the call and is utilized to transmit interaction information during calling; so that the following problem is solved: although the related art can achieve the object of performing information interaction between the two sides of the call, an information interaction process can be performed through the voice channel only, thus the information interaction efficiency is low; and the following effect is achieved: two sides of the call can perform information interaction through a combination of the data channel and the voice channel, so that the information interaction efficiency of the two sides of the call is improved.

It should be additionally noted that the embodiment, through multiple predetermined display modes of information, increases the diversity of performing information interaction through the data channel, and thus achieve the effect of further improving the information interaction efficiency.

It should be additionally noted that the mutual transfer steps of the first interaction information and the second interaction information in the embodiment may be repeatedly performed multiple times till the two sides of the call complete the information interaction, which will not be limited by the embodiment.

In an illustrative embodiment, after the user establishes the voice channel and the data channel with the opposite terminal device of one fast food restaurant through the terminal, as shown in Fig. 6B, the terminal displays a blank interface by default. The service staff may transmit a latest preferential meal page to the terminal firstly through the data channel, and controls the terminal to display the page. The page displays three preferential meals, and the user may select the preferential meals to be ordered on the page by clicking regions 61, 62 and 63. As shown in Fig. 6C, when the user purchases the preferential meals or no desired preferential meals are provided, the user may inform the service staff of the opposite terminal device of needing a main menu for ordering through the voice channel. The service staff then controls the terminal to display a main menu page 64. The user may select the desired meal types through clicking regions 65, 66 and 67. After the user clicks the package region 65, the terminal acquires and displays a package selection page 68 from the opposite terminal device, and the user may select the package to be ordered in this interface. As shown in Fig. 6D, when the terminal displays the package page 68, the user may also query the service staff the detail information of each package through the voice channel. The service may also control the terminal to display a details page 69 of the package queried by the user. Then the user may inform the service staff of the package to be ordered according to the acquired information, or request the service staff to switch to the details page of other packages.

Embodiments of devices of the present disclosure are described hereinafter, which may be used for performing embodiments of methods of the present disclosure. For the details not described in the embodiments of devices of the present disclosure, the embodiments of methods of the present disclosure may be referred to.

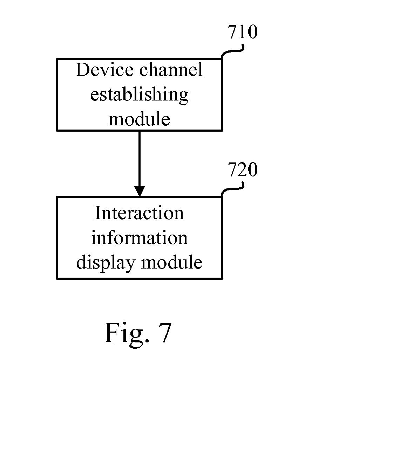

Fig. 7 is a block diagram showing a calling device, according to another exemplary embodiment. The calling device may become part or all of a terminal through software, hardware or a combination thereof. The calling device may include: a device channel establishing module 710 and an interaction information display module 720.

The device channel establishing module 710 is configured to, when a call is conducted with an opposite terminal device through a voice channel, establish a data channel for assisting the call with the opposite terminal device.

The interaction information display module is configured to display in at least one of two ends of the call, interaction information provided by an end opposite to the at least one of two ends of the call according to the data channel, the interaction information being for coordination and interaction between the two ends of the call based on contents of the call.

In conclusion, according to the calling device provided by the embodiment, one data channel is additionally established between two sides of the call and is utilized to transmit interaction information during the call; so that the following problem is solved: although the related art can achieve the object of performing information interaction between the two sides of the call, an information interaction process can be performed through the voice channel only, thus the information interaction efficiency is low; and the following effect is achieved: two sides of the call can perform information interaction through a combination of the data channel and the voice channel, so that the information interaction efficiency of the two sides of the call is improved.

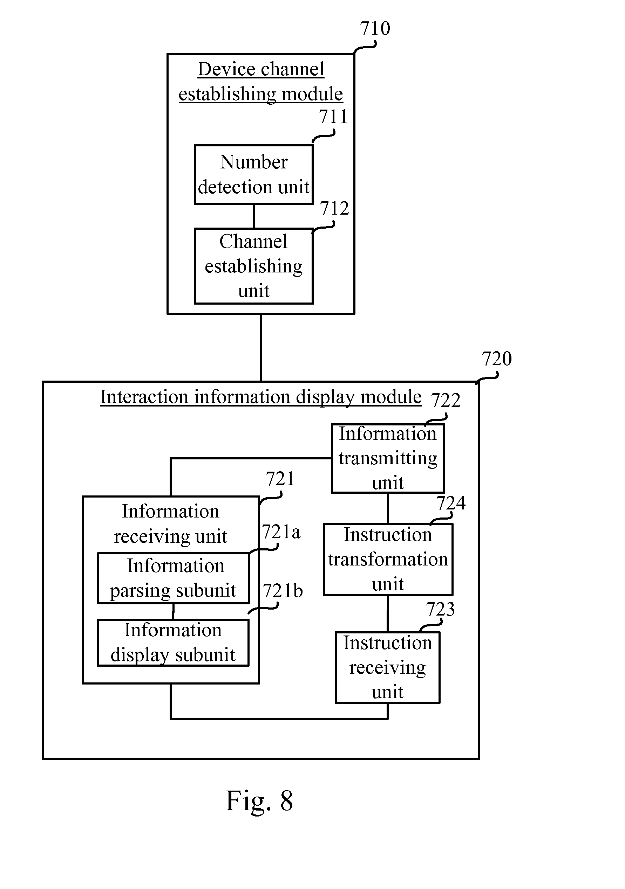

Fig. 8 is a block diagram showing a calling device, according to another exemplary embodiment. The calling device may become part or all of a terminal through software, hardware or a combination thereof. The calling device may include: a device channel establishing module 710 and an interaction information display module 720.

The device channel establishing module 710 is configured to, when a call is conducted with an opposite terminal device through a voice channel, establish a data channel for assisting the call with the opposite terminal device.

The interaction information display module 720 is configured to display in at least one of two ends of the call, interaction information provided by an end opposite to the at least one of two ends of the call according to the data channel, the interaction information being for coordination and interaction between the two ends of the call based on contents of the call.

Optionally, the channel establishing module 710 includes: a number detection unit 711 and a channel establishing unit 712.

The number detection unit 711 is configured to detect whether a telephone number of the opposite terminal device is a preset number.

The channel establishing unit 712 is configured to, when the telephone number is the preset number, establish the data channel for assisting the call with the opposite terminal device.

Optionally, the number detection unit 711 is configured to, when the preset number is a service number, detect whether the telephone number of the calling equipment is recorded in a preset service number whitelist, the service number whitelist being stored locally or in a third party service platform.

Optionally, the device channel establishing module 710 is configured to, when receiving a trigger signal for establishing the data channel, establish the data channel for assisting the call with the opposite terminal device.

Optionally, when the opposite terminal device is an independent calling equipment, the data channel is a data channel established between the local terminal and the independent calling equipment; or,

when the opposite terminal device includes a calling equipment and a server associated with the calling equipment, the data channel is a data channel established between the local terminal and the server.

Optionally, the data channel is a data channel established between the local terminal and the opposite terminal device through a third party service platform.

Optionally, the interaction information display module 720 includes: an information receiving unit 721, and/or, an information transmitting unit 722.

The information receiving unit 721 is configured to receive first interaction information provided by the opposite terminal device through the data channel; and display the first interaction information in a predetermined form.

The information transmitting unit 722 is configured to transmit second interaction information to the opposite terminal device through the data channel, the opposite terminal device being configured to display the second interaction information in a predetermined form or use the second interaction information.

The predetermined form includes at least one of displaying in a user interface, playing sounds and displaying a signal lamp.

Optionally, the information receiving unit 721 includes: an information parsing subunit 721a and an information display subunit 721b.

The information parsing subunit 721a is configured to, when the first interaction information includes a service information page provided by a service number, parse the service information page, the service information page including at least one of an information display page, an information collection page, a service providing page and a service operation page associated with a service provided by the service number.

The information display subunit 721b is configured to display the service information page in the user interface.

Optionally, the information display subunit 721b is configured to display the service information page according to user's operation;
or,
display the service information page according to a control by the opposite terminal device.

Optionally, the interaction information display module 720 further includes: an instruction receiving unit 723 and an instruction transformation unit 724.

The instruction receiving unit 723 is configured to, when the first interaction information is displayed in the user interface and the first interaction information is the service information page provided by the service number, receive an operation instruction inputted by a user on the service information page.

The instruction transformation unit 724 is configured to transform the operation instruction into the second interaction information.

The service information page includes at least one of an information display page, an information collection page, a service providing page and a service operation page associated with a service provided by the service number.

In conclusion, according to the calling device provided by the embodiment, one data channel is additionally established between two sides of the call and is utilized to transmit interaction information during the call; so that the following problem is solved: although the related art can achieve the object of performing information interaction between the two sides of the call, an information interaction process can be performed through the voice channel only, thus the information interaction efficiency is low; and the following effect is achieved: two sides of the call can perform information interaction through a combination of the data channel and the voice channel, so that the information interaction efficiency of the two sides of the call is improved.

It should be additionally noted that the embodiment, through multiple predetermined display modes of information, increases the diversity of performing information interaction through the data channel, and thus achieve the effect of further improving the information interaction efficiency.

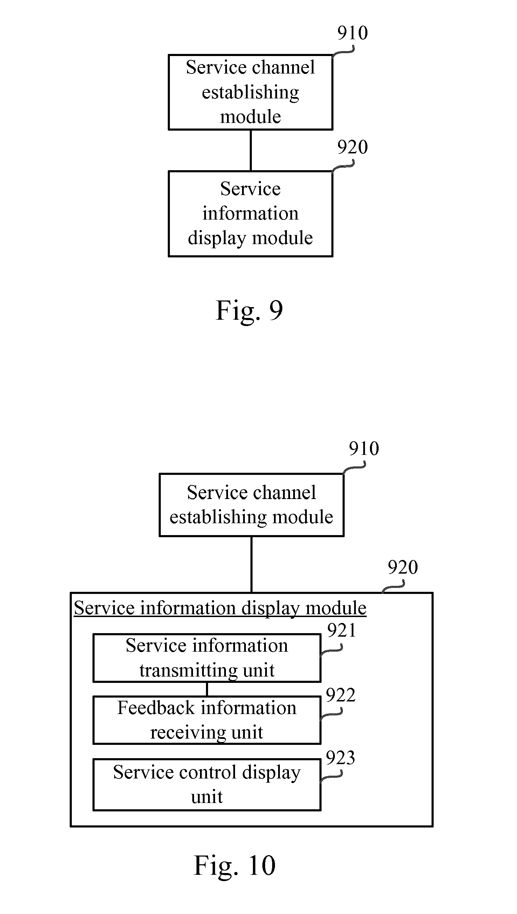

Fig. 9 is a block diagram showing a calling device, according to another exemplary embodiment. The calling device may become part or all of a server through software, hardware or a combination thereof. The calling device may include: a service channel establishing module 910 and a service information display module 920.

The service channel establishing module 910 is configured to, when a call is conducted between a terminal and a calling equipment through a voice channel, establish a data channel for assisting the call with the terminal.

The service information display module 920 is configured to display in at least one of the terminal and the server, interaction information provided by an end opposite to the at least one of the terminal and the server according to the data channel, the interaction information being for coordination and interaction between the two ends of the call based on contents of the call.

In conclusion, according to the calling device provided by the embodiment, one data channel is additionally established between two sides of the call and is utilized to transmit interaction information during the call; so that the following problem is solved: although the related art can achieve the object of performing information interaction between the two sides of the call, an information interaction process can be performed through the voice channel only, thus the information interaction efficiency is low; and the following effect is achieved: two sides of the call can perform information interaction through a combination of the data channel and the voice channel, so that the information interaction efficiency of the two sides of the call is improved.

Fig. 10 is a block diagram showing a calling device, according to another exemplary embodiment. The calling device may become part or all of a server through software, hardware or a combination thereof. The calling device may include: a service channel establishing module 910 and a service information display module 920.

The service channel establishing module 910 is configured to, when a call is conducted between a terminal and a calling equipment through a voice channel, establish a data channel for assisting the call with the terminal.

The service information display module 920 is configured to display in at least one of the terminal and the server, interaction information provided by an end opposite to the at least one of the terminal and the server according to the data channel, the interaction information being for coordination and interaction between the two ends of the call based on contents of the call.

Optionally, the service channel establishing module 910 is configured to establish the data channel for assisting the call with the terminal through a third party service platform.

Optionally, the service information display module 920 includes: a service information transmitting unit 921, and/or, a feedback information receiving unit 922.

The service information transmitting unit 921 is configured to transmit first interaction information to the terminal through the data channel, the terminal being configured to display the first interaction information in a predetermined form; and/or,

the feedback information receiving unit 922 is configured to receive the second interaction information provided by the terminal through the data channel; displays the second interaction information in a predetermined form, or, uses the second interaction information.

The predetermined form includes at least one of displaying in a user interface, playing sounds and displaying a signal lamp.

Optionally, when the server is a server corresponding to the service number, the first interaction information includes a service information page corresponding to the service number, the service information page including at least one of an information display page, an information collection page, a service providing page and a service operation page associated with a service provided by the service number.

Optionally, the service information display module 920 further includes: a service control display unit 923.

The service control display unit 923 is configured to control display of the service information page in the terminal.

Optionally, the second interaction information is information obtained by the terminal by transforming an operation instruction received when the service information page is displayed in the user interface, the operation instruction being inputted on the service information page by a user.

In conclusion, according to the calling device provided by the embodiment, one data channel is additionally established between two sides of the call and is utilized to transmit interaction information during the call; so that the following problem is solved: although the related art can achieve the object of performing information interaction between the two sides of the call, an information interaction process can be performed through the voice channel only, thus the information interaction efficiency is low; and the following effect is achieved: two sides of the call can perform information interaction through a combination of the data channel and the voice channel, so that the information interaction efficiency of the two sides of the call is improved.

It should be additionally noted that the embodiment, through multiple predetermined display modes of information, increases the diversity of performing information interaction through the data channel, and thus achieves the effect of further improving the information interaction efficiency.

With respect to the devices in the above embodiments, the specific manners for performing operations for individual modules therein have been described in detail in the embodiments regarding the methods, which will not be elaborated herein.

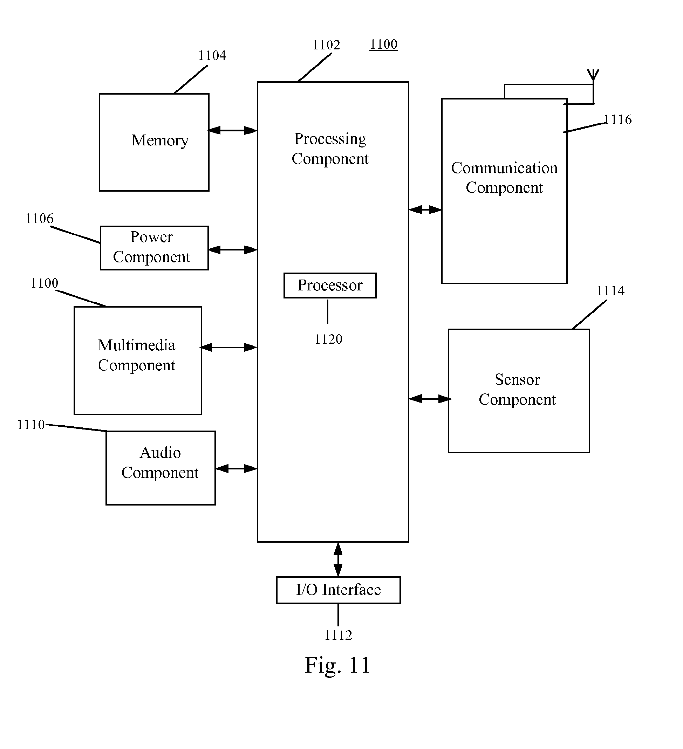

Fig. 11 is a block diagram showing a calling device 1100, according to an exemplary embodiment. For example, the device 1100 may be a mobile phone, a computer, a digital broadcast terminal, a messaging device, a gaming console, a tablet, a medical device, exercise equipment, a personal digital assistant, and the like.

Referring to Fig. 11, the device 1100 may include one or more of the following components: a processing component 1102, a memory 1104, a power component 1106, a multimedia component 1108, an audio component 1110, an input/output (I/O) interface 1112, a sensor component 1114, and a communication component 1116.

The processing component 1102 typically controls overall operations of the device 1100, such as the operations associated with display, telephone calls, data communications, camera operations, and recording operations. The processing component 1102 may include one or more processors 1120 to execute instructions to perform all or part of the steps in the above described methods. Moreover, the processing component 1102 may include one or more modules which facilitate the interaction between the processing component 1102 and other components. For instance, the processing component 1102 may include a multimedia module to facilitate the interaction between the multimedia component 1108 and the processing component 1102.

The memory 1104 is configured to store various types of data to support the operation of the device 1100. Examples of such data include instructions for any applications or methods operated on the device 1100, contact data, phonebook data, messages, pictures, video, etc. The memory 1104 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1106 provides power to various components of the device 1100. The power component 1106 may include a power management system, one or more power sources, and any other components associated with the generation, management, and distribution of power in the device 1100.

The multimedia component 1108 includes a screen providing an output interface between the device 1100 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1108 includes a front camera and/or a rear camera. The front camera and/or the rear camera may receive an external multimedia datum while the device 1100 is in an operation mode, such as a photographing mode or a video mode. Each of the front camera and the rear camera may be a fixed optical lens system or have focus and optical zoom capability.

The audio component 1110 is configured to output and/or input audio signals. For example, the audio component 1110 includes a microphone ("MIC") configured to receive an external audio signal when the device 1100 is in an operation mode, such as a call mode, a recording mode, and a voice recognition mode. The received audio signal may be further stored in the memory 1104 or transmitted via the communication component 1116. In some embodiments, the audio component 1110 further includes a speaker to output audio signals.

The I/O interface 1112 provides an interface between the processing component 1102 and peripheral interface modules, such as a keyboard, a click wheel, buttons, and the like. The buttons may include, but are not limited to, a home button, a volume button, a starting button, and a locking button.

The sensor component 1114 includes one or more sensors to provide status assessments of various aspects of the device 1100. For instance, the sensor component 1114 may detect an open/closed status of the device 1100, relative positioning of components, e.g., the display and the keypad, of the device 1100, a change in position of the device 1100 or a component of the device 1100, a presence or absence of user contact with the device 1100, an orientation or an acceleration/deceleration of the device 1100, and a change in temperature of the device 1100. The sensor component 1114 may include a proximity sensor configured to detect the presence of nearby objects without any physical contact. The sensor component 1114 may also include a light sensor, such as a CMOS or CCD image sensor, for use in imaging applications. In some embodiments, the sensor component 1114 may also include an accelerometer sensor, a gyroscope sensor, a magnetic sensor, a pressure sensor, or a temperature sensor.

The communication component 1116 is configured to facilitate communication, wired or wirelessly, between the device 1100 and other devices. The device 1100 can access a wireless network based on a communication standard, such as WiFi, 2G, or 3G, or a combination thereof. In one exemplary embodiment, the communication component 1116 receives a broadcast signal or broadcast associated information from an external broadcast management system via a broadcast channel. In one exemplary embodiment, the communication component 1116 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1100 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1104, executable by the processor 1120 in the device 1100, for performing the above-described methods. For example, the non-transitory computer-readable storage medium may be a ROM, a RAM, a CD-ROM, a magnetic tape, a floppy disc, an optical data storage device, and the like.

There is also provided a non-transitory computer-readable storage medium including instructions, which enables the device 1100 to perform the calling methods provided by the foregoing embodiments when instructions in the storage medium are executed by the processor of the device 1100.

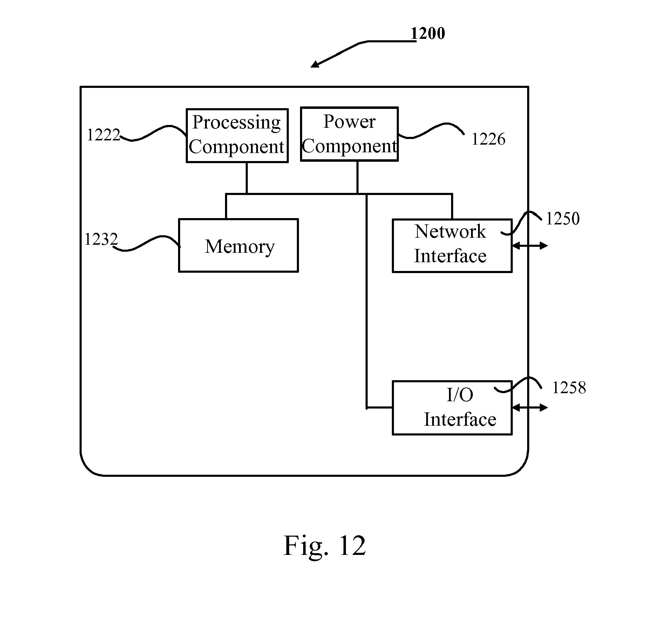

Fig. 12 is a block diagram showing a calling device 1200, according to an exemplary embodiment. For example, the device 1200 may be provided as a server associated with a calling equipment. Referring to Fig. 12, the device 1200 includes a processing component 1222 that further includes one or more processors, and memory resources represented by a memory 1232 for storing instructions executable by the processing component 1222, such as application programs. The application programs stored in the memory 1232 may include one or more modules each corresponding to a set of instructions. Further, the processing component 1222 is configured to execute the instructions to perform the above described method.

The device 1200 may also include a power component 1226 configured to perform power management of the device 1200, wired or wireless network interface(s) 1250 configured to connect the device 1200 to a network, and an input/output (I/O) interface 1258. The device 1200 may operate based on an operating system stored in the memory 1232, such as Windows ServerTM, Mac OS XTM, UnixTM, LinuxTM, FreeBSDTM, or the like.

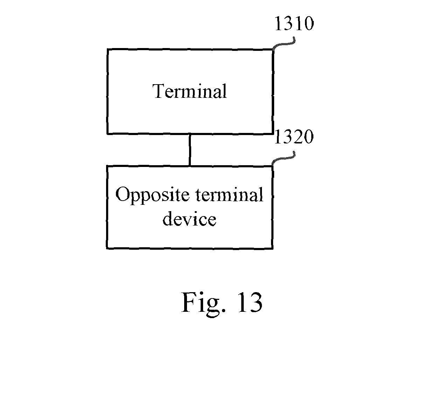

Fig. 13 is a block diagram showing a calling system, according to an exemplary embodiment. The system includes a terminal 1310 and an opposite terminal device 1320.

The terminal 1310 may be any one of the device as shown in Fig. 7, the device as shown in Fig. 8 or the device as shown in Fig. 11.

The opposite terminal device 1320 may either be the device identical to the terminal 1310, or any one of the device as shown in Fig. 9, the device as shown in Fig. 10 or the device as shown in Fig. 12.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope and spirit of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention should only be limited by the appended claims.

## Claims

1. A telephone calling method performed at a terminal, the method comprising:
when a telephone call is conducted through a voice channel between the terminal and a device at an opposite end of the voice channel, establishing (201) a data channel for assisting the call with the device at the opposite end; and
displaying (202) in at least one of two ends of the call, interaction information provided by the opposite end according to the data channel, the interaction information being for coordination and interaction between the two ends of the call based on contents of the call.

2. The method according to claim 1, wherein the establishing the data channel for assisting the call with the device at the opposite end comprises:
detecting whether a telephone number of the device at the opposite end is a preset number; and
if the telephone number is the preset number, establishing the data channel with the device at the opposite end; and
the detecting whether the telephone number of the device at the opposite end is the preset number comprises:
if the preset number is a service number, detecting whether the telephone number of the device at the opposite end is recorded in a preset service number whitelist, the service number whitelist being stored locally or in a third party service platform.

3. The method according to claim 1, wherein the establishing the data channel for assisting the call with the device at the opposite end comprises:
when receiving a trigger signal for establishing the data channel, establishing the data channel for assisting the call with the device at the opposite end.

4. The method according to any one of claims 1 to 3, wherein
when the device at the opposite end is an independent phone equipment, the data channel is a data channel established between a local end and the independent phone equipment; or,
when the device at the opposite end comprises phone equipment and a server associated with the phone equipment, the data channel is a data channel established between the local end and the server.

5. The method according to any one of claims 1 to 4, wherein the displaying in at least one of two ends of the call, interaction information provided by the opposite end according to the data channel comprises:
receiving first interaction information provided by the device at the opposite end through the data channel and displaying the first interaction information in a predetermined form; and/or,
transmitting second interaction information to the device at the opposite end through the data channel, the device at the opposite end being configured to display the second interaction information in a predetermined form or use the second interaction information;
wherein the predetermined form comprises at least one of displaying in a user interface, playing sounds and displaying a signal light.

6. The method according to claim 5, wherein the displaying the first interaction information in the predetermined form comprises:
when the first interaction information comprises a service information page provided by a service number, parsing the service information page, the service information page comprising at least one of an information display page, an information collection page, a service providing page and a service operation page associated with a service provided by the service number; and
displaying the service information page in the user interface.

7. The method according to claim 6, **characterized in that**, the displaying the service information page in the user interface comprises:
displaying the service information page according to the user's operation;
or,
displaying the service information page according to a control by the device at the opposite end.

8. The method according to claim 5, wherein the method further comprises:
when the first interaction information is displayed in the user interface and the first interaction information is the service information page provided by the service number, receiving an operation instruction inputted by a user on the service information page; and
transforming the operation instruction into the second interaction information;
wherein the service information page comprises at least one of an information display page, an information collection page, a service providing page and a service operation page associated with a service provided by the service number.

9. A calling method performed in a server associated with phone equipment, the method comprising:
when a telephone call is conducted between a terminal and the phone equipment through a voice channel, establishing (301) a data channel for assisting the call with the terminal; and
displaying (302) on a display of at least one of the terminal and the server, interaction information provided by an end opposite to the at least one of the terminal and the server according to the data channel, the interaction information being for coordination and interaction between two ends of the call based on contents of the call.

10. The method according to claim 9, wherein the displaying on a display of at least one of the terminal and the server, interaction information provided by the end opposite to the at least one of the terminal and the server according to the data channel comprises:
transmitting first interaction information to the terminal through the data channel, the terminal being configured to display the first interaction information in a predetermined form; and/or,
receiving second interaction information provided by the terminal through the data channel; displaying the second interaction information in a predetermined form, or, using the second interaction information;
wherein the predetermined form comprises at least one of displaying in a user interface, playing sounds and displaying a signal light.

11. A terminal calling device comprising:
a device channel establishing module (710) configured to, when a telephone call is conducted through a voice channel between the terminal and a device at an opposite end of the voice channel, establish a data channel for assisting the call with the device at the opposite end; and
an interaction information display module (720) configured to display in at least one of two ends of the call, interaction information provided by the opposite end according to the data channel, the interaction information being for coordination and interaction between the two ends of the call based on contents of the call.

12. A server based telephone calling device, the device being configured for use in a server associated with phone equipment, the device comprising:
a service channel establishing module (910) configured to, when a telephone call is conducted between a terminal and the phone equipment through a voice channel, establish a data channel for assisting the call with the terminal; and
a service information display module (920) configured to display on a display of at least one of the terminal and the server, interaction information provided by an end opposite to the at least one of the terminal and the server according to the data channel, the interaction information being for coordination and interaction between two ends of the call based on contents of the call.

13. A terminal calling device comprising:
a processor; and
a memory for storing instructions executable by the processor;
wherein the processor is configured to:
cause the device to perform the method of any of claims 1 to 8.

14. A server based telephone calling device, the device being configured for use in a server associated with phone equipment, the device comprising:
a processor; and
a memory for storing instructions executable by the processor;
wherein the processor is configured to:
cause the device to perform the method of any of claims 9 or 10.

15. A calling system, **characterized in that**, the system comprises: a terminal and a device at an opposite end;
the terminal comprises the device according to claim 11; and the device at the opposite end comprises the device according to any one of claims 11 to 12;
or,
the terminal comprises the device according to claim 13; and the device at the opposite end comprises the device according to claim 14.
